# EUROPEAN PATENT SPECIFICATION

(11) **EP 1 662 078 B1**
(45) Date of publication and mention of the grant of the patent: **03.12.2014**
(21) Application number: 04771214.6
(22) Date of filing: 04.08.2004
(51) Int. Cl.: G07C 9/00

(54) **RECOGNITION DEVICE**
ERKENNUNGSVORRICHTUNG
DISPOSITIF DE RECONNAISSANCE

(30) Priority: 08.08.2003 JP 2003290775
(43) Date of publication of application: 31.05.2006
(73) Proprietor: Sharp Kabushiki Kaisha, Osaka 545-8522 (JP); Asahi Denso Co., Ltd., Hamakita-shi Shizuoka (JP)
(72) Inventor: ISHIMARU, Junji, Tenri-shi, Nara 632-0011 (JP); MORIMOTO, Toyohiko, Shiki-gun, Nara 636-0237 (JP); SUZUKI, Michiyuki, Shizuoka 431-3112 (JP)
(74) Representative: Treeby, Philip David William
(86) International application number: PCT/JP2004/011179
(87) International publication number: WO 2005/014959

(56) References cited:
- EP-A2- 0 744 708
- JP-A- 10 018 659
- JP-A- 10 292 687
- JP-A- 2000 331 132
- JP-A- 2000 352 231
- JP-A- 2001 295 525
- JP-U- 6 032 645
- JP-Y2- 6 005 480
- JP-Y2- 6 029 395
- US-A- 5 905 446
- US-B1- 6 482 495

## Description

### Technical field

The present invention relates to a recognition apparatus having a data-storing key and a reader for reading the data stored in the key by means of wireless communication, for effecting key identification based on the data read off the key.

### Background Art

A POS (Point of Sales) terminal and a cash register such as an ECR (Electronic Cash Register) are provided with a recognition apparatus for identifying a person in charge of sale (clerk), namely a clerk key recognition apparatus. The clerk key recognition apparatus is composed of a clerk key which belongs to a clerk, a keyhole unit into which the clerk key is inserted, and identifying means for identifying the clerk key inserted. A recognition apparatus is also used as a security apparatus for use in e.g. a PC (Personal Computer) server for effecting user confirmation.

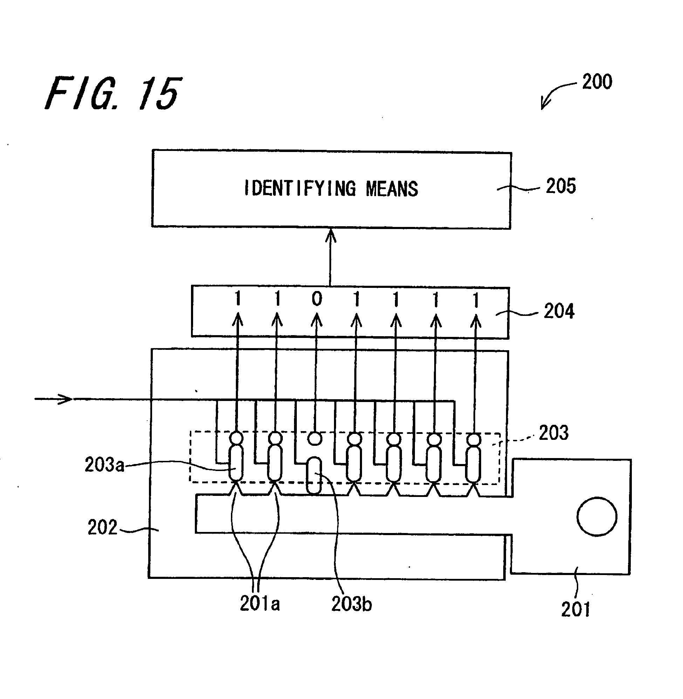

Fig. 15 is a constitution diagram of a conventional clerk key recognition apparatus 200. In that part of a clerk key 201 which is inserted into a keyhole unit 202 is formed a concavo-convex portion 201a. Upon the insertion of the clerk key 201 into the keyhole unit 202, contact points 203 disposed inside the keyhole unit 202 are brought into ON and OFF states by the concavo-convex portion 201a. A contact point 203a placed in an ON state puts out a number of "1", whereas a contact point 203b placed in an OFF state puts out a number of "0" . Thence, signals indicating the status of the individual contact points are transmitted from an output I/F (interface) 204 to identifying means 205. In the clerk key recognition apparatus 200, since both of the sections of the concavo-convex portion 201a and the contact points 203 are 7 in number, it follows that the output I/F 204 produces a 7-bit signal. For example, given that the contact point located on the rear side of the keyhole unit 202 corresponds to a higher order bit, whereas the contact point located on the front side of the keyhole unit 202 corresponds to a lower order bit, then a signal indicating "1101111" is produced as key data in the state as shown in Fig. 15. The identifying means 205 stores therein a correspondence table showing a clerk-to-key data correlation. Upon receipt of a signal fed from the output I/F 204, the identifying means 205 acts to identify a clerk corresponding to the key data on the basis of the correspondence table.

That is, in the conventional clerk key recognition apparatus, it is necessary for the concavo-convex portion and the contact point to make contact with each other. In this case, the contact part between the concavo-convex portion and the contact point wears out from use, which gives rise to a problem of improper identification. Furthermore, the keyhole unit is installed in a limited region of a cash register and the size of the key hole is reduced accordingly, in consequence whereof there results difficulty in inserting the clerk key.

In order to overcome these problems, the following techniques have been developed to date. Disclosed in Japanese Unexamined Patent Publication JP-A 2003-129714 is a key system composed of a key, a cylinder, and a computer. In this construction, an RFID (Radio Frequency Identification) module is built into a key insertion portion, whereby key identification can be made in a non-contact manner through wireless communication between an antenna unit disposed inside the cylinder and the RFID module. By combining an IC element and an antenna in a single-piece structure, it is possible to reduce the size of the RFID module, and thereby accomplish a small and inexpensive key.

Disclosed in Japanese Unexamined Patent Publication JP-A 5-141139 (1993) is a locking apparatus that employs a light-emitting element. In this construction, a call code is outputted from a key device by means of the light-emitting element. Upon receipt of the call code, the locking apparatus sends a random response code back. After the response code is recognized by the key device, a recognition code is outputted therefrom. So long as the recognition code received by the locking apparatus is found to be correct, the apparatus will be unlocked.

Moreover, as a key system designed for a motor vehicle, an immobilizer has been in use. The immobilizer includes a transponder (electronic chip) which is embedded in an ignition key. The transponder carries out communication with an engine control circuit with use of a wireless radio frequency link. The ID code specific to the transponder embedded in the key and the ID code of a controller mounted in a vehicle are electronically checked with each other. When it is determined that there is a match, the ignition can be turned on to start the engine. When it is determined that the two ID codes do not match, the ignition will not be permitted to prohibit the starting of the engine.

In the key system disclosed in JP-A 2003-129714, although there is no abrasion problem because identification is made in a non-contact manner, since the key needs to be inserted into the cylinder for system operation, it follows that the difficulty of key insertion remains as a problem to be addressed. On the other hand, as a problem involved in the locking apparatus disclosed in JP-A 5-141139 (1993), if an obstacle is present between the key device and the locking apparatus, the locking apparatus will be unserviceable. It is thus impossible for the key and the reader to be temporarily fixed to each other so as to enable the working of electronic equipment during the time when the key is kept fitted in, which will be suggested as one of the application examples of the invention.

JP 2000-331132 describes an IC token and reader-writer. The reader-writer main body is made of resin and fits in a hole of a casing. A reception part of a token is located at the exposed part of the reader-writer body. A permanent magnet is placed at a position opposite to a magnetic ring contained in the token and attracts the magnetic ring to prevent slipping-off of the token and to hold the token.

### Disclosure of Invention

It is an object of the invention to provide a recognition apparatus in which key identifying capability and the ease-of-use of a clerk are improved.

The invention provides a recognition apparatus comprising:
a key having a built-in transponder in which data is stored;
a reader having a built-in inquiry unit for reading the data stored in the transponder by means of wireless communication, the reader being provided with a magnet for magnetic attraction; and
identifying means for effecting key identification based on the data read off the transponder by the inquiry unit, wherein the key is provided with a ring-shaped magnetic substance corresponding to the magnet for magnetic attraction,
wherein the key and the reader are detachably attached to each other by means of magnetic attraction,
wherein an antenna of the inquiry unit and an antenna of the transponder are oriented to confront each other so that their directivities point to the substantially central position of the key, and wherein the antenna of the inquiry unit and the antenna of the transponder are located on a central axis of each of the magnet of the reader and the magnetic substance of the key, respectively, characterised in that
the reader's magnet is a ring-shaped magnet, the magnet having north poles and south poles arranged in an alternating manner in a circumferential direction, and in that
the magnet of the reader is equally divided in the circumferential direction into four or six poles.

According to the invention, the inquiry unit built into the reader reads out the data stored in the transponder built into the key, so that key identification can be made by the identifying means based on the readout data. Moreover, the recognition apparatus is so designed that the antenna of the inquiry unit and the antenna of the transponder are oriented to confront each other in a state where the key and the reader are set in predetermined positions. This makes it possible to establish communication between the inquiry unit and the transponder with accuracy.

According to the invention, when the key and the reader are attached to each other by magnetic attraction, a radio wave transmitted from the inquiry unit and a radio wave transmitted from the transponder are allowed to pass through a region near the center of the key. This makes it possible to ensure high-quality wireless communication.

Data communication between the key and the reader is carried out through the inquiry unit and the transponder by means of a so-called RFID system. This helps minimize the possibility of malfunctioning caused by a smear in a contact point or the like factor. Moreover, the recognition apparatus is characterized in that the key and the reader can temporarily be fixed to each other by magnetic attraction. This makes it possible to fit the key in a desired position with ease without the necessity of inserting it into a keyhole. Hence, not only the key identifying capability but also the ease-of-use of a clerk can be improved.

According to the invention, by virtue of the above-described configuration, the key and the reader can be made attachable to and detachable from each other by magnetic attraction.

In the invention, a magnet is provided in the reader. In order to avoid communication disturbance, the magnet should preferably be positioned away from the region and space where the antennas of the key and the reader confront each other substantially in terms of directivity.

Moreover, the transponder and inquiry unit are so arranged that the direction in which their respective antennas are oriented is substantially parallel with a central axis passing through the center of a ring-shaped magnet during the time when the key and the reader are kept attracted to each other. In general, the reader is secured to electronic equipment and the key is possessed by a user. In the case of exploiting magnetic attraction to fit the key in the reader, the key is not always placed in a fixed position with the same posture. In light of this, by adj usting the direction in which the antenna of the transponder is oriented to be substantially parallel with the central axis passing through the center of the ring-shaped magnet, it is possible to ensure satisfactory wireless communication even if the key is rotated about the central axis.

According to the invention, it is possible to decrease the influence of a magnetic field in a region near the midportion of the ring formed of a magnet, and thereby effect wireless communication between the inquiry unit and the transponder with high reliability.

### Brief Description of Drawings

Other and further objects, features, and advantages of the invention will be more explicit from the following detailed description taken with reference to the drawings wherein:
Fig. 1 is a block diagram showing the structure of an electronic cash register 100 which includes a recognition apparatus according to an embodiment of the present invention;
Fig. 2 is a view showing the memory configuration of the RAM 3;
Fig. 3 is a perspective view showing the external appearance of the ECR 100;
Fig. 4 is a sectional view of the clerk key 10 and the reader 11;
Fig. 5 is a block diagram showing the configurations of the clerk key 10 and the reader 11;
Fig. 6 is a view showing the positional relationship between the antenna 111 of the reader 11 and the transponder 101 of the clerk key;
Fig. 7 is a view showing how the magnet ring 115 becomes magnetized:
Fig. 8 is a flow chart showing the procedure in key identification to be followed by the ECR 100;
Fig. 9 is a flow chart showing the procedure to operate the reader 11 in the process of wireless communication between the clerk key 10 and the reader 11;
Fig. 10 is a block diagram showing the configuration of the reader 11;
Fig. 11 is a flow chart showing the procedure in data conversion to be followed by the controller 123;
Fig. 12 is a view showing a key data table stored in the built-in memory 123a;
Fig. 13 is a view showing another example of the shape of the magnet and the magnetic material which is attracted to the magnet under a magnetic force;
Fig. 14 is a view showing another example of the shape of the magnet and the magnetic material which is attracted to the magnet under a magnetic force; and
Fig. 15 is a constitution diagram of a conventional clerk key recognition apparatus 200.

### Best Mode for Carrying out the Invention

Hereinafter, a description will be given as to a POS terminal as well as an ECR, namely an electronic cash register taken up as the example of electronic equipment having a recognition apparatus. In advance of operation, the electronic cash register is required to check to see whether a user is a clerk with permission or not. The recognition apparatus is used as means for identifying clerks in charge.

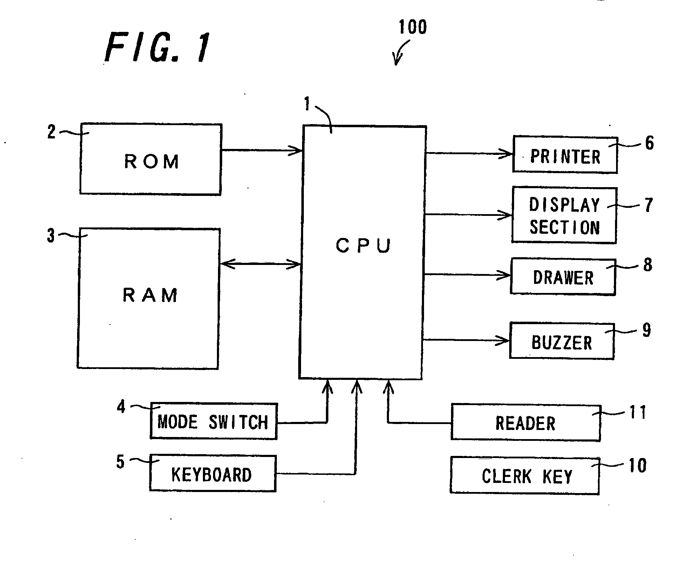

Fig. 1 is a block diagram showing the structure of an electronic cash register (hereafter abbreviated to "ECR") 100 which includes a recognition apparatus according to an embodiment of the present invention. The ECR 100 is realized by the use of e.g. a micro processor, and is thus composed of: a central processing unit (hereafter abbreviated to "CPU") 1 for controlling the working of the ECR 100 as a whole; a read only memory (hereafter abbreviated to "ROM") 2 that stores therein programs and so forth for controlling different actions of the ECR 100; and a random access memory (hereafter abbreviated to "RAM") 3 that stores therein various data on settings. Included further in the ECR 100 are: a mode switch (SW) 4 for allowing selection of the operational modes of the ECR 100; a keyboard 5 for inputting information such as merchandise section codes and sale proceeds; a printer 6 for printing computation results produced by the CPU 1 on register tapes or recording paper sheets; a display section 7 realized by the use of e.g. a liquid crystal display for indicating information such as the amount of sales; a drawer 8 for accommodating therein coins and bank bills; a buzzer 9 for notifying errors such as misoperation; a clerk key 10 for identifying a clerk; and a reader 11 for identifying the clerk key 10.

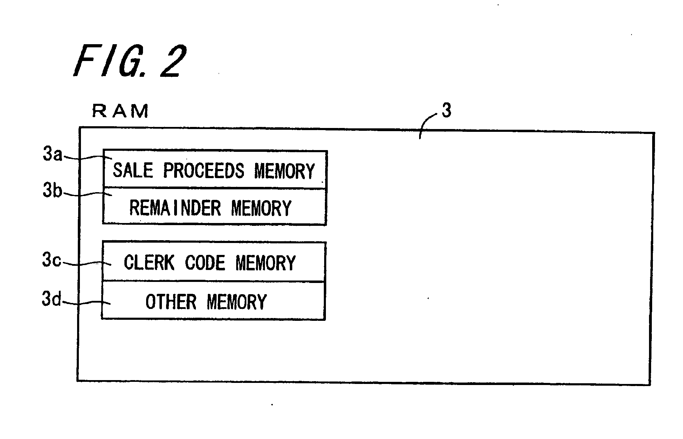

Fig. 2 is a view showing the memory configuration of the RAM 3. The RAM 3 includes customer transaction memory, namely sale proceeds memory 3a for holding the prices of merchandises on sale and remainder memory 3b for holding remaining amounts, and clerk code memory 3c for holding information on the determination of which clerk key is validated, as well. The clerk code memory 3c stores therein the codes of clerks in charge and key data corresponding to the clerk codes. If a clerk key fitted in the reader is found to be inconsistent with the authorized code, restriction will be imposed on the operational mode of the ECR 100. For example, even if the mode SW 4 is in a "registration" position, it is impossible to actuate the ECR 100. Note that the CPU 1, the ROM 2, and the RAM 3 constitute identifying means.

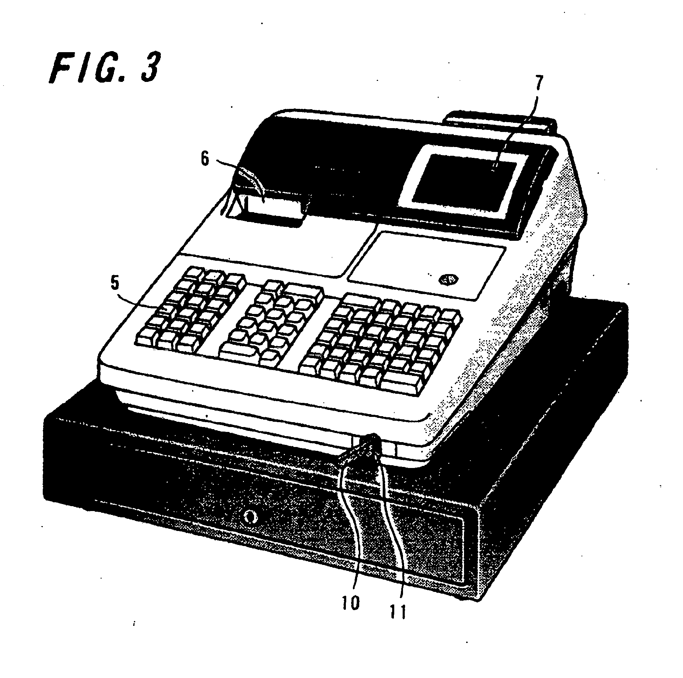

Fig. 3 is a perspective view showing the external appearance of the ECR 100. The display section 7 is arranged at the upper right on the top surface of the ECR 100. Arranged beside the display section 7 is the printer 6. The keyboard 5 is so arranged as to occupy the lower half of the top surface of the ECR 100. The reader 11 is arranged on the right-hand side of the front face of the ECR 100. In Fig. 3, the clerk key 10 is illustrated as being fitted in the reader 11.

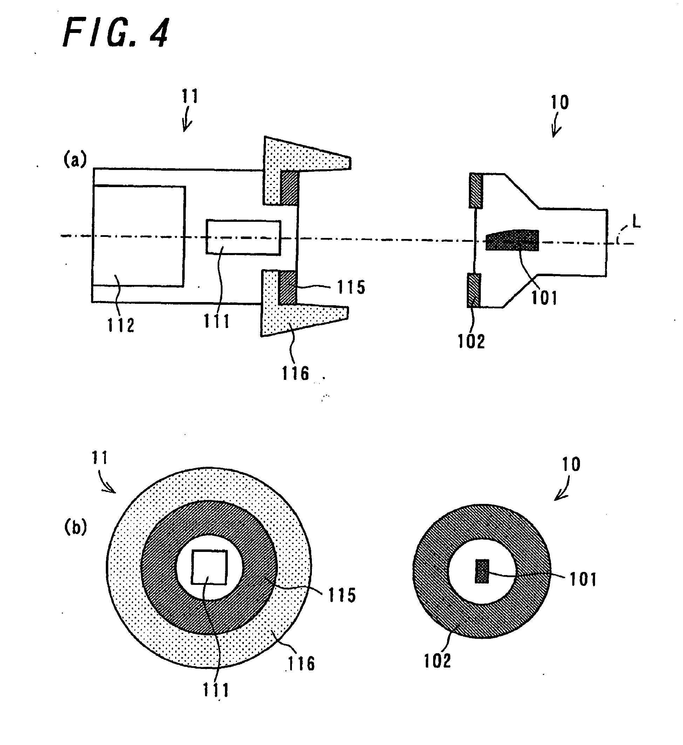

Fig. 4 is a sectional view of the clerk key 10 and the reader 11. More specifically, Fig. 4(a) shows the sections of the clerk key 10 and the reader 11 that are parallel to a central axis L, whereas Fig. 4 (b) shows the sections thereof that are perpendicular to the central axis L. The clerk key 10 has a built-in transponder 101. Moreover, in order for the clerk key 10 to be fitted in the reader 11 by magnetic attraction, a magnetic ring 102 made of a magnetic substance (a metal, for instance) is fixedly attached to the clerk key 10. In the reader 11, an antenna 111 for effecting communication with the transponder 101 of the clerk key 10 and a communication circuit block 112 are incorporated. The antenna 111 and the communication circuit block 112 constitute an inquiry unit.

Moreover, a magnet ring 115 is fixedly attached to the reader 11 to hold the clerk key 10 by magnetic attraction. In order to prevent the magnet ring 115 from making contact with a magnetic card or the like item inadvertently, a resin-made guide 116 is disposed so as to surround the magnet ring 115. The guide 116 allows the clerk key 10 to be guidedly attracted to the magnet ring 115 smoothly. By virtue of the guide, optimal positional relationship can be employed between the key and the reader, namely the antenna 111 and the transponder 101. This makes it possible to achieve wireless communications with higher reliability.

The transponder 101 and the antenna 111 are each located on the central axis L of the magnetic ring 102 and the magnet ring 115 so that communication can be effected during the time when the clerk key 10 is kept fitted in the reader 11 by magnetic attraction. To be more specific, the antenna 111 is so arranged that the direction in which the antenna 111 is oriented runs substantially parallel to the central axis L during the time when the key is kept fitted in the reader by magnetic attraction.

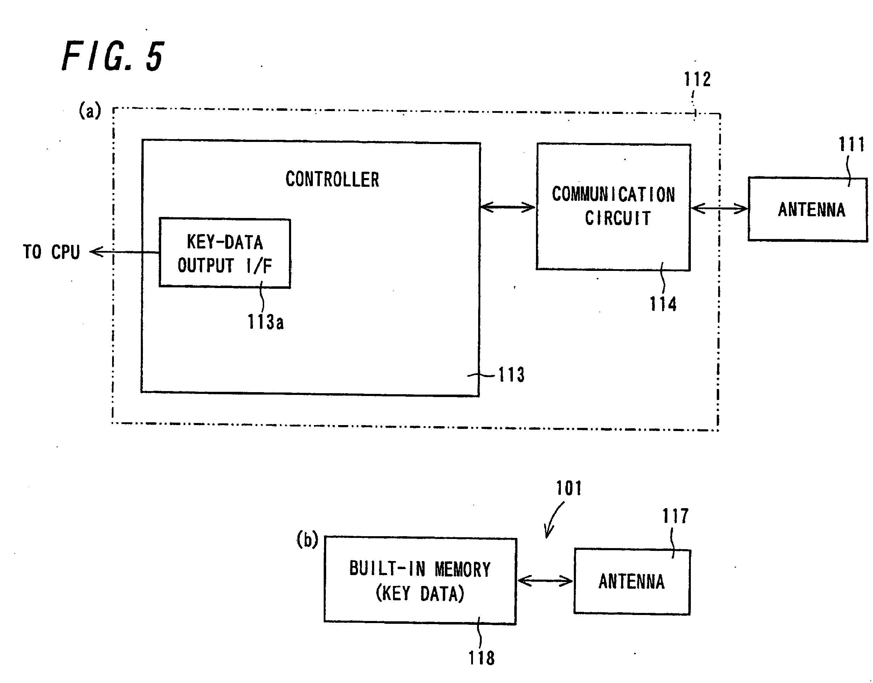

Fig. 5 is a block diagram showing the configurations of the clerk key 10 and the reader 11. More specifically, Fig. 5(a) is a block diagram of the reader 11, whereas Fig. 5(b) is a block diagram of the clerk key 10. The communication circuit block 112 is composed of a controller 113 and a communication circuit 114. The controller 113 includes an output I/F 113a. The transponder 101 incorporated in the clerk key 10 has an antenna 117 and built-in memory 118.

The controller 113 issues a command for driving the communication circuit 114 to transmit an inquiry radio wave. Upon the receipt of the command, the communication circuit 114 generates a high-frequency wave so that the inquiry radio wave can be transmitted through the antenna 111. During the time when the clerk key 10 is kept fitted in the reader 11, the antenna 117 of the transponder 101 receives the inquiry radio wave, and thereby electric power is obtained through power conversion. Simultaneously, the key data stored in the built-in memory 118 is transmitted to the reader 11. The key data received by the reader 11 is transmitted from the output I/F 113a to the CPU 1 under the control of the controller 113. The CPU 1 is able to identify the clerk key 10 by making a comparison between the received key data and the clerk code. Note that, here, the key data refers to ID (first data) assigned to the transponder 101.

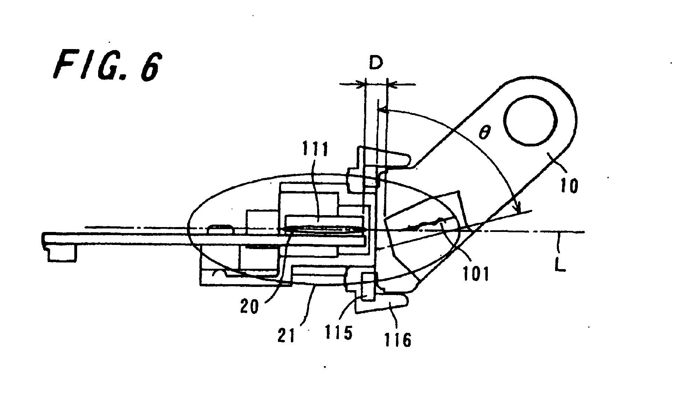

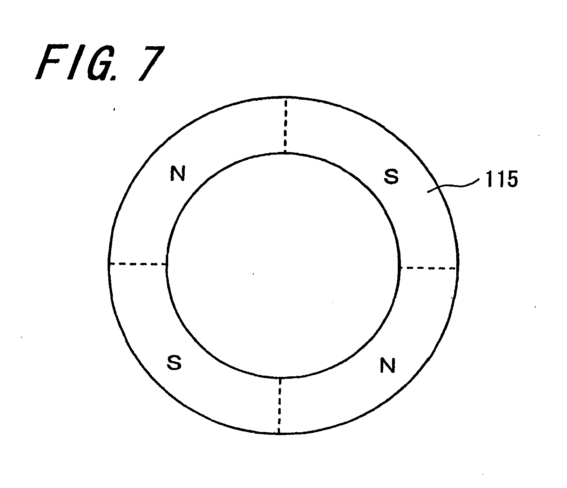

Fig. 6 is a view showing the positional relationship between the antenna 111 of the reader 11 and the transponder 101 of the clerk key. Fig. 7 is a view showing how the magnet ring 115 becomes magnetized. As shown in Fig. 7, the magnet ring 115 is magnetized with its N and S poles arranged circumferentially in an alternating manner. By achieving magnetization in the circumferential direction in that way, it is possible to decrease the influence of a magnetic field at the midportion of the magnet ring 115, and thereby effect wireless communication between the antenna 111 of the reader 11 and the transponder 101 of the clerk key satisfactorily. Note that the magnet ring 115 has a four equally-divided structure as shown in the figure or a six equally-divided structure in the circumferential direction. If the number of divisions is greater than 6, the proportion of the boundary regions between the N and S poles, namely the proportion of the regions that exhibit poor magnetic attraction will be increased. This is liable to result in a decrease in attractive force for holding the clerk key 10, giving rise to a problem of the key coming off easily.

In this way, wireless communication can be established between the antenna 111 of the key reader 11 and the transponder 101 of the clerk key through the magnetic ring 102 and the magnet ring 115 magnetized with its poles arranged circumferentially in an alternating manner. The relationship of the positions of the antenna 111 and the transponder 101 at which communication can be established therebetween is dependent mainly upon the output characteristics of the antenna 111. As shown in Fig. 6, depending upon the power level of a radio wave, an uncommunicatable region 20 exists with respect to the antenna 111. The uncommunicatable region 20 is located in the vicinity of the antenna 111. In this region, the magnitude of the radio wave generated from the antenna 111 is so great that the transponder 101 is unable to recognize the code, and it is thus no longer possible to effect communication. Meanwhile, on the outer side of the uncommunicatable region 20 is present a communicatable region 21. In a case where the transponder 101 is located outside the communicatable region 21, no communication is effected. Hence, the positional relationship between the antenna 111 and the transponder 101 has to be such that the transponder 101 lies within the communicatable region 21 during the time when the clerk key 10 is kept fitted in the reader 11 by magnetic attraction. Moreover, since the clerk key 10 and the reader 11 are attracted firmly to each other by means of the ring-shaped members, it follows that the clerk key 10 is allowed to rotate about the central axis L. In light of this, it is essential for the transponder 101 to lie within the communicatable region 21 no matter how the clerk key 10 is rotated.

Now, a description will be given below as to an implementation example of the positional relationship between the antenna 111 and the transponder 101 with which communication can be effected.

The communicatable region 21 refers to a region in which the range of a voltage generated inside the transponder 101 extends from 0.5 to 0.8 V. In order for the transponder 101 to lie within this region, for example, the antenna 111 is arranged in the vicinity of the central axis L of the magnet ring 115 which is 14 mm in inner circumferential diameter and 22 mm in outer circumferential diameter. Then, a distance D between the antenna 111 and the transponder 101 is adjusted to fall in a range of from 3 to 5 mm during the time when the clerk key 10 is kept fitted in. Note that, when the mutually attracted portion between the magnet ring 115 and the magnetic ring 102 is defined as a reference surface, then the distance between the reference surface and the antenna 111 is set at 2 mm. Moreover, the transponder 101 is oriented at an angle of from 75 to 90 degrees with respect to the radial direction of the magnet ring 115 (i.e. oriented substantially parallel to the central axis) during the time when the clerk key 10 is kept fitted in. Note that the orientation of the transponder 101 refers to the direction in which the antenna 117 of the transponder 101 is oriented.

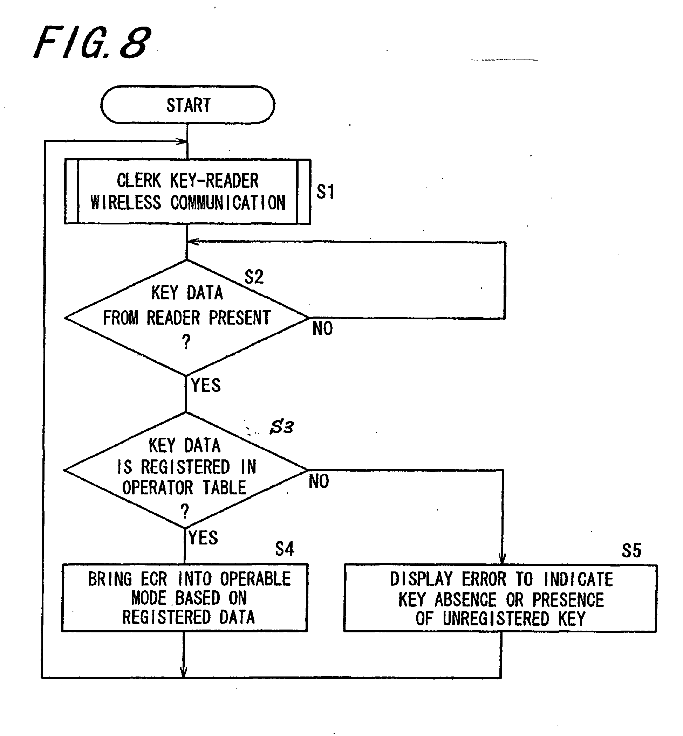

Fig. 8 is a flow chart showing the procedure in key identification to be followed by the ECR 100. At the outset, in Step S1, wireless communication is established between the clerk key 10 and the reader 11. The process of the wireless communication will be explained in detail later on.

In Step S2, the CPU 1 judges whether key data has been transmitted from the reader 11 or not. When the presence of the key data is confirmed, the procedure proceeds to Step S3, but, if not, the execution is placed in a standby condition. The judgment is basically made on the precondition that the data is periodically transmitted from the reader 11. However, also in a case where the data is transmitted aperiodically only when some change takes place, for example, when the condition changes from a clerk key 10-absent state to a clerk key 10-present state, the judgment is made properly in a similar manner.

In Step S3, the CPU 1 judges whether the key data received is registered or not with reference to the clerk code memory 3c. When the registration of the key data is confirmed, the procedure proceeds to Step S4, but, if not, the procedure proceeds to Step S5.

In Step S4, in accordance with the registered data, the ECR is brought into an operable mode. For example, key entry is permitted. In Step S5, an error is notified to indicate the absence of a key or the presence of an unregistered key.

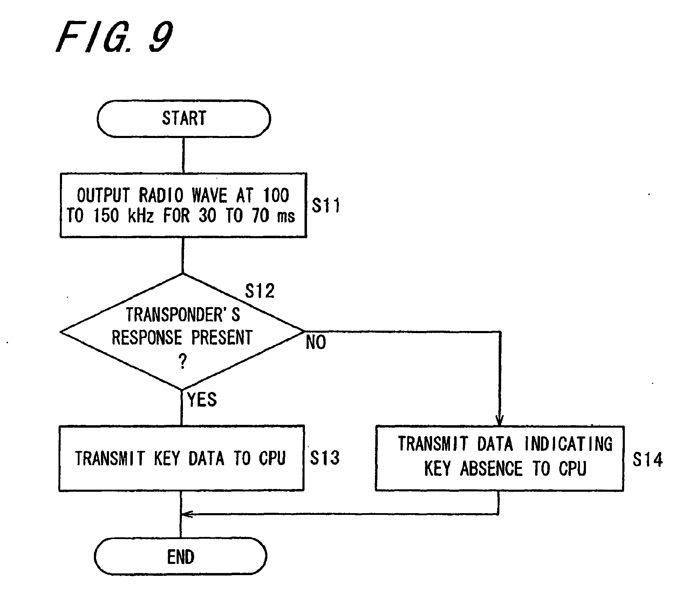

Fig. 9 is a flow chart showing the procedure to operate the reader 11 in the process of wireless communication between the clerk key 10 and the reader 11. At the outset, in Step S11, in order to impart operational electric power to the transponder 101, the communication circuit 114 is driven to produce a radio wave with a frequency of 100 to 150 kHz, for a time period of 30 to 70 ms, under the control of the controller 113. Note that the controller 113 is so designed that radio-wave transmission is carried out periodically, for example at intervals of 150 to 300 ms, regardless of the presence or absence of a response from the transponder 101.

In Step S12, the presence or absence of a response from the transponder is checked. When the presence of the response is confirmed, the procedure proceeds to Step S13, but, if not, the procedure proceeds to Step S14.

In a state where the clerk key 10 is fitted in, with the induced electromotive force resulting from the radio wave with a frequency of 100 to 150 kHz, the transponder 101 acts to put out the key data (64 bits) stored by the low-frequency FSK (Frequency-Shift Keying) modulation technique. In Step S13, upon receipt of the key data, the communication circuit 114 transmits it to the controller 113, and thence the key data is transmitted from the controller 113 to the CPU 1.

In a state where the clerk key 10 is not fitted in, the transponder 101 makes no response. Therefore, the key data indicating the absence of a key is transmitted to the CPU 1.

Next, a second example of an ECR which includes a recognition apparatus according to an embodiment of the present invention will be explained below. In the first example, the ID assigned to the transponder 101 is used as the key data of the clerk key 10, and thus in the clerk code memory 3c is registered the ID of the transponder 101. In a case where the ID of the transponder 101 is of data compiled in an unconventional code system as described previously, it may be difficult to register the data of new code system in the clerk code memory 3c. In this case, as a method for data registration, the use of key data of conventional code system, for example 7-bit data as shown in Fig. 15 can be considered. However, this method cannot be practiced without making alterations to the internal settings of the ECR.

By way of contrast, in the second example, the ID of the transponder can be converted into key data of conventional code system by the controller of the reader before being transmitted to the CPU 1. Therefore, all that needs to be done is to replace the reader, and there is no need to make alterations to the other constituent components such as the clerk code memory.

It will thus be seen that the ECR of the second example has basically the same constitution as that of the first example, the only difference being the structure of the controller of the reader 11. Accordingly, only the reader 11 will be explained with reference to a block diagram thereof, and no description will be given as to the other constituent components.

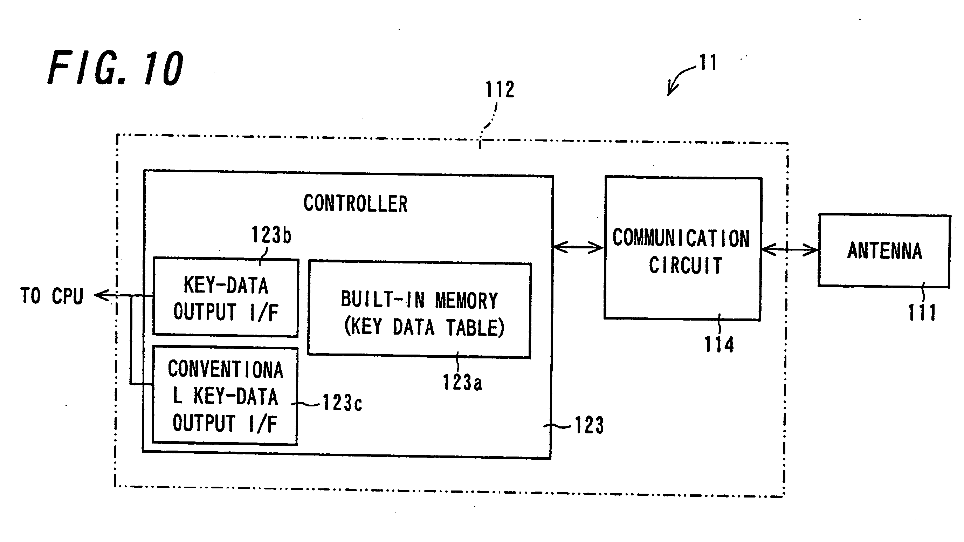

Fig. 10 is a block diagram showing the configuration of the reader 11. The communication circuit block 112 is composed of a controller 123 and a communication circuit 114. The controller 123 includes built-in memory 123a, an output I/F 123b, and an output I/F 123c. Upon receipt of the ID of the transponder 101, the controller 123 of the reader 11 converts the ID into key data of conventional style, namely second data, with reference to the built-in memory 123a. The ID in the form of the second data is transmitted from the output I/F 123c to the CPU 1. Note that the ID of the transponder 101 received can also be transmitted without being processed. In this case, the ID in an unconverted state is transmitted from the output I/F 123b to the CPU 1. The selection of ID data form is made by a clerk in charge.

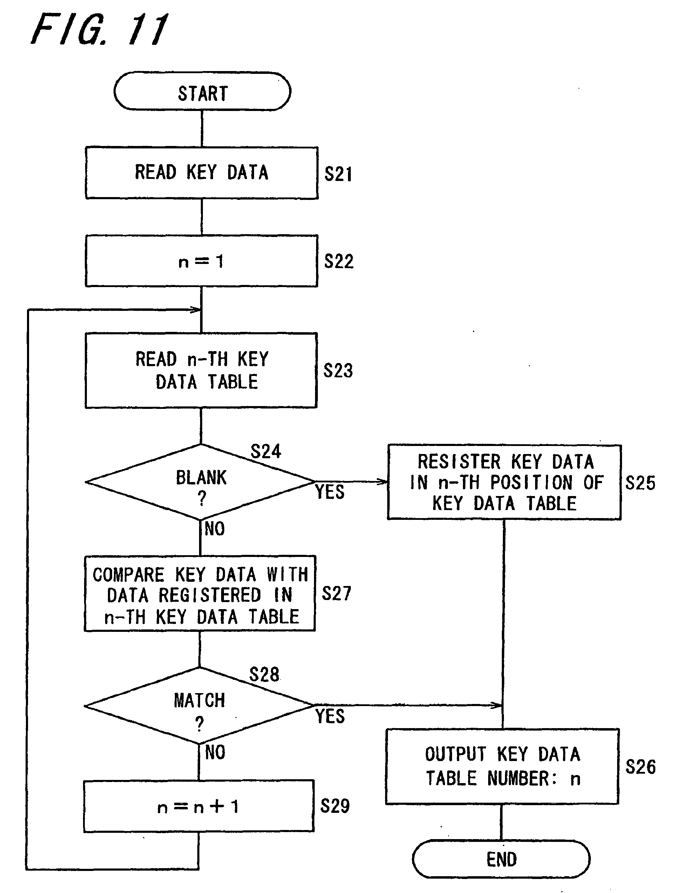

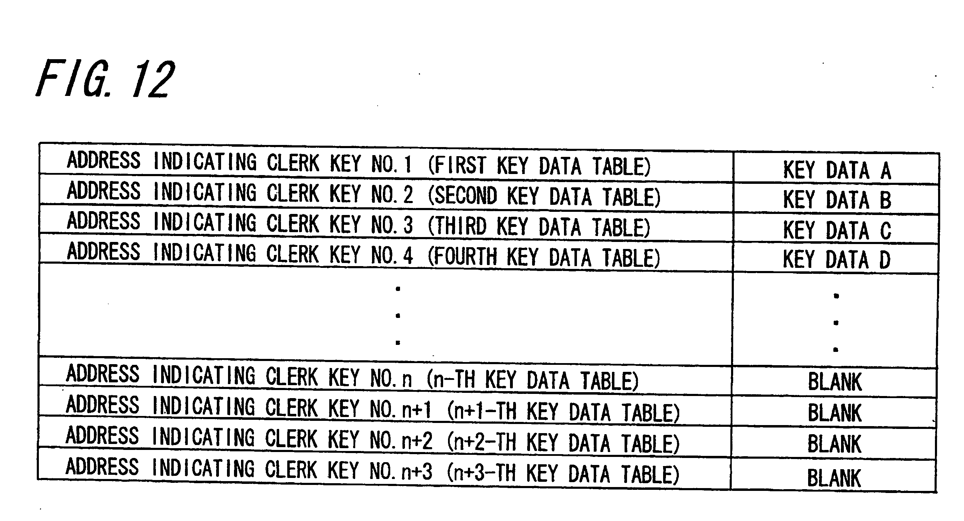

Fig. 11 is a flow chart showing the procedure in data conversion to be followed by the controller 123. Fig. 12 is a view showing a key data table stored in the built-in memory 123a.

At the outset, in Step S21, the ID of the transponder 101 is read in as key data. In Step S22, a condition where n = 1 is established. In Step S23, referring to the key data table, the data of the n-th (n = 1) key data table is read in. In Step S24, it is checked whether a registration field for the key data representing the ID of the transponder 101 is left in blank or not. When a blank field is confirmed, the procedure proceeds to Step S25, but, if not, the procedure proceeds to Step S27.

In Step S25, the key data representing the ID of the transponder 101 is registered in the registration field for the n-th (n = 1) key data. In Step S26, the key data of conventional style registered in the registration field for the n-th (n = 1) conventional key data is read in and is then outputted from the output I/F 123c.

In Step S27, the key data is compared with the key data representing the ID of the transponder 101 registered in the registration field for the n-th (n = 1) key data. In Step S28, when it is determined that there is a match, the procedure proceeds to Step S26. When it is determined that the two data do not match, the procedure proceeds to Step S29. In Step S29, after a number 1 is added to n, the procedure returns to Step S23, and from then on the subsequent steps will be repeated.

Incidentally, in the examples thus fardescribed, the reader is provided with a magnet ring, whereas the clerk key is provided with a magnetic ring. This allows the clerk key to be fitted in the reader by magnetic attraction. Alternatively, the reader may be provided with a magnetic ring, whereas the clerk key may be provided with a magnet ring, or a magnet ring may be disposed in both of the reader and the clerk key. Note that the positional relationship between the antenna of the reader and the transponder, which has been optimally determined to effect satisfactory communication, varies depending upon the position of the magnet ring. Therefore, the positional relationship is adjusted on an as needed basis in consideration of the position of the magnet ring.

The above description deals with the case where the magnet and the magnetic material which is attracted to the magnet under a magnetic force are each ring-shaped.

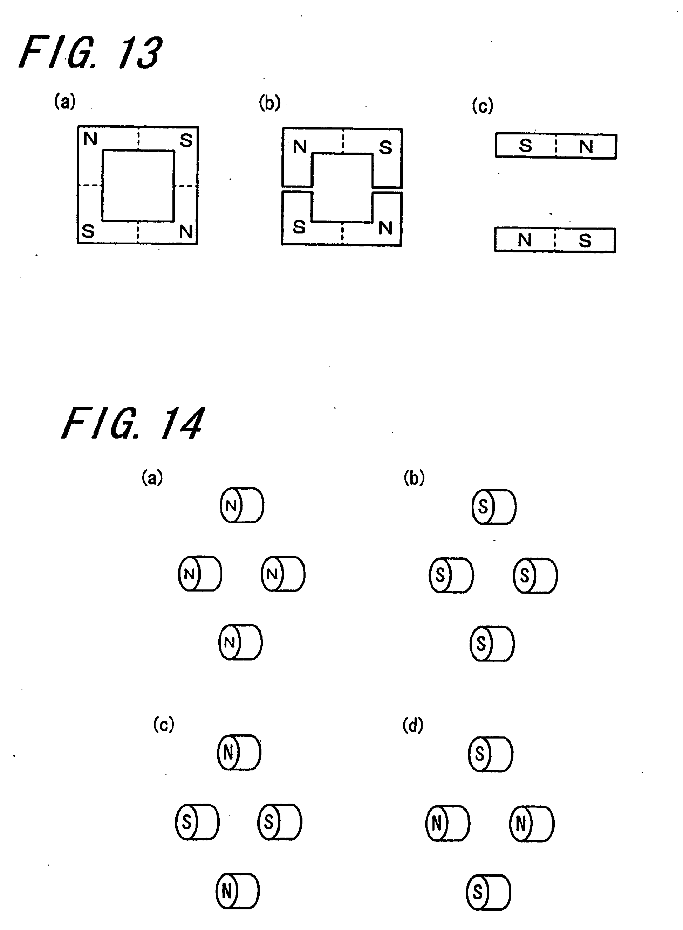

Alternatively, the magnet and the magnetic material may be given a quadrangular configuration with an opening drilled at the center thereof, namely a so-called frame configuration as shown in Fig. 13(a), or may be given a two equally-divided frame configuration as shown in Fig. 13(b). In another alternative, as shown in Fig. 13(c), a plurality of (for example, two pieces of) rectangular-shaped magnet segments may be positioned in a manner which does not interfere with the directional orientation of the antenna.

It is also possible to achieve magnetization in a thicknesswise direction. For example, a plurality of (for example, four pieces of) magnets are positioned in a manner which does not interfere with the directional orientation of the antenna, with the magnetization direction for each of the magnets aligned with the thicknesswise direction. Figs. 14(a) and 14(b) illustrate the magnetic polarity of the four magnets as seen from opposite directions, with one figure showing one sides of the magnets each having an N pole, and the other figure showing the other sides of the magnets each having an S pole. Moreover, Figs. 14(c) and 14(d) also illustrate the magnetic polarity of the four magnets as seen from opposite directions. In this case, however, the magnets are so arranged that different poles are adjacent to each other.

In the above the clerk key is illustrated as being knob-shaped. Alternatively, the clerk key may be given the shape of a pen. In the pen-shaped clerk key, the transponder is emplaced within the shaft of the pen.

Further, the above description deals with the case where the recognition apparatus is used to identify a clerk in charge of operating the ECR. Alternatively, the recognition apparatus may be used as a security apparatus for identifying a PC-server user. In the case of applying the recognition apparatus to a PC server, it is possible to determine whether or not the PC server is brought into an operable state, as well as to determine whether the PC server is operated in an administrator mode or in a user mode, in accordance with key data. The recognition apparatus may also be used as a security apparatus to be employed in an electronic lock installed in the door of a hotel room.

Still further, although the above description deals with the case where a magnet is used as means for effecting attachment of the key to the reader, it is possible to adopt another means instead. For example, a guide may be provided for positioning of the key and the reader. In this case, with the aid of the guide, the key is fitted in the reader by a spring, a projection, or the like member, or it can be fitted in simply by being placed along the guide.

### Industrial Applicability

As described heretofore, according to the invention, the antenna of the inquiry unit and the antenna of the transponder are oriented to confront each other. This makes it possible to establish communication between the inquiry unit and the transponder with accuracy.

Moreover, according to the invention, in a case where the key and the reader are attached to each other by magnetic attraction, a radio wave transmitted from the inquiry unit and a radio wave transmitted from the transponder are allowed to pass through a region near the center of the key. This makes it possible to ensure high-quality wireless communication.

Moreover, according to the invention, not only key identifying capability but also the ease-of-use of a clerk in charge can be improved.

Further, according to the invention, the key and the reader are designed to be attachable and detachable to each other by magnetic attraction.

Further, according to the invention, the influence of a magnetic field can be decreased in the vicinity of the midportion of the ring formed of a magnet. This makes it possible to enhance the reliability of wireless communication between the inquiry unit and the transponder.

Still further, according to the invention, optimal positional relationship can be employed between the key and the reader, namely the inquiry unit and the transponder. This makes it possible to enhance the reliability of wireless communication between the inquiry unit and the transponder. In addition, a magnetic card or the like item can be prevented from making contact with the magnet inadvertently.

## Claims

1. A recognition apparatus comprising:
a key (10) having a built-in transponder (101), in which data is stored;
a reader (11) having a built-in inquiry unit (111, 112) for reading the data stored in the transponder by means of wireless communication, the reader being provided with a magnet for magnetic attraction; and
identifying means for effecting key identification based on the data read off the transponder by the inquiry unit, wherein the key (10) is provided with a ring-shaped magnetic substance (102) corresponding to the magnet (115) for magnetic attraction,
wherein the key (10) and the reader (11) are detachably attached to each other by means of magnetic attraction,
wherein an antenna (111) of the inquiry unit and an antenna (117) of the transponder (101) are oriented to confront each other so that their directivities point to the substantially central position of the key, and wherein the antenna (111) of the inquiry unit and the antenna (117) of the transponder (101) are located on a central axis (L) of each of the magnet (115) of the reader (11) and the magnetic substance (102) of the key (10), respectively, **characterised in that**
the reader's magnet is a ring-shaped magnet (115), the magnet (115) having north poles and south poles arranged in an alternating manner in a circumferential direction, and **in that**
the magnet (115) of the reader (11) is equally divided in the circumferential direction into four or six poles.

## Patentansprüche

1. Erkennungsvorrichtung umfassend:
einen Schlüssel (10) mit einem eingebauten Transponder (101), in dem Daten gespeichert sind;
ein Lesegerät (11) mit einer eingebauten Abfrageeinheit (111, 112) zum Lesen der in dem Transponder gespeicherten Daten durch Drahtloskommunikation, wobei das Lesegerät mit einem Magnet für magnetische Anziehung versehen ist; und
Identifizierungsmittel zum Bewirken einer Schlüsselidentifikation basierend auf den Daten, die von der Abfrageeinheit von dem Transponder abgelesen werden, wobei der Schlüssel (10) mit einer ringförmigen magnetischen Substanz (102) versehen ist, die mit dem Magnet (115) für magnetische Anziehung korrespondiert,
wobei der Schlüssel (10) und das Lesegerät (11) durch magnetische Anziehung lösbar miteinander verbunden sind,
wobei eine Antenne (111) der Abfrageeinheit und eine Antenne (117) des Transponders (101) derart ausgerichtet sind, dass sie einander gegenüberliegen, so dass ihre Richtfaktoren auf die im Wesentlichen zentrale Position des Schlüssels zeigen, und wobei die Antenne (111) der Abfrageeinheit und die Antenne (117) des Transponders (101) auf einer Zentralachse (L) von jedem der Magneten (115) des Lesegeräts (11) bzw. der magnetischen Substanz (102) des Schlüssels (10) angeordnet sind, **dadurch gekennzeichnet, dass**
der Magnet des Lesegeräts ein ringförmiger Magnet (115) ist, wobei der Magnet (115) Nordpole und Südpole aufweist, die in wechselnder Art und Weise in einer Umfangsrichtung angeordnet sind, und dass
der Magnet (115) des Lesegeräts (11) in der Umfangsrichtung gleichmäßig in vier oder sechs Pole geteilt ist.

## Revendications

1. Appareil de reconnaissance comprenant :
une clé (10) avec un transpondeur intégré (101) dans lequel sont stockées des données ;
un lecteur (11) avec une unité d'interrogation intégrée (111, 112) pour lire les données stockées dans le transpondeur à l'aide d'une communication sans fil, le lecteur étant pourvu d'un aimant pour une attraction magnétique ; et
des moyens d'identification pour réaliser l'identification de clé sur la base des données lues dans le transpondeur par l'unité d'interrogation, étant précisé que la clé (10) est pourvue d'une substance magnétique annulaire (102) qui correspond à l'aimant (115) pour une attraction magnétique,
étant précisé que la clé (10) et le lecteur (11) sont fixés l'un à l'autre de manière amovible, par attraction magnétique,
qu'une antenne (111) de l'unité d'interrogation et une antenne (117) du transpondeur (101) sont orientées de manière à se faire face, pour que leurs directivités soient dirigées vers la position globalement centrale de la clé, et que l'antenne (111) de l'unité d'interrogation et l'antenne (117) du transpondeur (101) sont situées sur un axe central (L) de l'aimant (115) du lecteur (11) et de la substance magnétique (102) de la clé (10), respectivement,
**caractérisé en ce que** l'aimant du lecteur est un aimant annulaire (115), l'aimant (115) ayant des pôles nord et des pôles sud disposés en alternance dans un sens circonférentiel, et
**en ce que** l'aimant (115) du lecteur (11) est divisé de manière égale, dans le sens circonférentiel, en quatre ou six pôles.
